# EUROPEAN PATENT APPLICATION

(11) **EP 4 332 804 A2**
(43) Date of publication of application: **06.03.2024**
(21) Application number: 22796264.4
(22) Date of filing: 26.04.2022
(51) Int. Cl.: G06F 21/55, H04L 47/2416

(54) **SYSTEM FOR AUTOMATICALLY EVALUATING THE QUALITY OF NETWORK TRAFFIC SIGNATURES**

(30) Priority: 30.04.2021 RU 2021112789
(71) Applicant: Limited Liability Company "Variti Plus", Moscow, 109004 (RU)
(72) Inventor: CHEMIAKIN, Anton Vladimirovich, Tavrovo, 308504 (RU)
(74) Representative: Osmans, Voldemars
(86) International application number: PCT/RU2022/050138
(87) International publication number: WO 2022/231480

(57) **Abstract**

The claimed invention relates to systems and methods for automatically assessing the quality of network traffic signatures, providing high efficiency of detection of malicious automated activity, the possibility of feedback, and reducing the need for computing power. The system for automatic assessment of the network traffic signature quality includes an event collection module, a list of decision signatures, an analysis module, a final aggregation module, and a pre-aggregation module. The pre-aggregation module is connected to the event collection module, to the analysis module, and/or to the final aggregation module. The pre-aggregation module is intended for continuous processing of raw data and demanding computations.

## Description

### Field of the Invention

The present invention relates to systems and methods of automatic assessment of network traffic signature quality. The invention is a feedback of network traffic filtering systems and performs grouping of network traffic by characteristic signatures with subsequent estimation of the proportion of automated and non-automated activity in each group based on static analysis of network traffic, which makes it possible to detect the presence of malicious activity in network traffic.

### State of art

The systems for assessing the network traffic signature quality and detecting malicious activity in the network traffic are often comprised of several modules located on a server, such as a data collecting module, a database module, a signature IDs module, and a data aggregation module. Such systems are non-automated since they do not contain any modules capable of automatically generating additional signatures based on the provided statistical analysis of the collected network traffic data.

Automated ones, including not only the above modules or their analogs but also additional modules responsible for statistical analysis of collected data, signature generation, and signature repositioning, are also known. These additional modules allow the system to be automated, making it more effective at detecting automated activity. Such automated systems are also known as feedback systems.

Patent RU2740027C1 (publ. on December 30, 2020; IPC: G06F 21/50; G06F 21/60; H04L 29/06) discloses the invention related to a method and system for preventing malicious automated attacks. The technical result is to prevent malicious attacks. The method assesses the user, based on the received request to the computer system regarding the session, by collecting numerical and statistical request metrics, counting metrics characterizing the user based on its statistics of communication with the resource, determining metrics based on total resource statistics demonstrating the user session deviation from the median and average session, obtaining the request legitimacy assessment based on these data via a statistical model, whereby the user is attributed to one of categories of legitimate, suspicious, or bot; for the legitimate user, the access to the resource is granted, for bot, the access to the resource is denied, and an additional check is performed for the suspicious user, wherein, based on its behavior analysis, the user is offered a task using a cryptographic algorithm with asymmetric encryption, and if the task is not solved correctly, it is assigned to the bot category and the access to the resource is denied; if the task is solved correctly, it is assigned to the legitimate user category and the access is granted. The first drawback of this system is that it is non-automated. The system and method detect malicious activity based on pre-defined signatures and do not involve additional signature generation. Furthermore, the system and method lack the step of statistical analysis of the network traffic, which allows detecting malicious automated activity in the network traffic more efficiently. Another drawback of the system and method is the lack of pre-aggregation of raw data and most demanding computations, and, hence, a data pre-aggregation module implementing pre-aggregation of raw data and most demanding computations. The present system and method include a step performed by a pre-aggregation module, wherein raw data and most demanding computations are continuously pre-aggregated based on a cascade of materialized views, leading to a reduced need for computing capacities for final data aggregation by a factor of 2 or 3, depending on the aggregation type.

Patent RU2538292C1 (published on January 27, 2015; IPC: G06F 21/55) discloses the invention related to computer equipment. The technical result is the detection of computer attacks of various types, combined simultaneous attacks of various types, and identification of attack types. The method of detecting computer attacks on the network-based computer system, which includes at least one computer connected to the network and having an operating system installed thereon and application software installed thereon, includes the traffic analysis system, wherein in order to analyze packages received from the network, particular parameters are selected and their values are calculated, which are then compared with the reference values, and the fact of the presence of a single or combined simultaneous attack and identifying the attack types is defined by a combination of the conditions set for the parameters. To process data packages received from the network, a traffic analysis system is used that allows the calculation of traffic parameters in real time. The first drawback of the method is that the malicious automated activity is detected according to the pre-set signatures, and, thus, the system is non-automated and detects the malicious automated activity less efficiently than its automated equivalents since it may only detect a fixed part of malicious automated activity in the network traffic that falls under the pre-set signatures. The second drawback related to the first one is that the method does not involve new signature generation. In addition, the final drawback is the lack of pre-aggregation of raw data and most demanding computations and, hence, a data pre-aggregation module that implements pre-aggregation of raw data and most demanding computations. The present system and method include a step performed by a pre-aggregation module, wherein raw data and most demanding computations are continuously pre-aggregated based on a cascade of materialized views, leading to a reduced need for computing capacities for final data aggregation by a factor of 2 or 3, depending on the aggregation type.

Patent RU2722693C1 (publ. on June 03, 2020; IPC: G06F 21/56) provides a computer-implemented method of identification of malicious software infrastructure or of a cybercriminal, wherein: a request is received containing an infrastructure element or a tag on attributing this element to the malicious software or the cybercriminal; a parameter of the received infrastructure element, an additional infrastructure element used by the same malicious software as the received infrastructure element, and an additional infrastructure parameter are retrieved from the database; the received infrastructure element and the parameter associated therewith as well as additional infrastructure element and the parameter associated therewith are analyzed; based on the analysis, statistical associations between the parameter of the retrieved infrastructure element and the parameter of the additional infrastructure element are identified; rules for searching for new infrastructure elements based on identified statistical associations are formed, and new infrastructure elements are retrieved from the database; new elements are assigned tags corresponding to the particular malicious software or cybercriminals, and the results are saved in the database. The technical result is to improve the efficiency of computer attack identification. The drawbacks of these systems and methods are the lack of pre-aggregation of raw data and the most demanding computations, and, hence, a data pre-aggregation module implementing pre-aggregation of raw data and the most demanding computations. The present system and method include a step performed by a pre-aggregation module, wherein raw data and most demanding computations are continuously pre-aggregated based on a cascade of materialized views, leading to a reduced need for computing capacities for final data aggregation by a factor of 2 or 3, depending on the aggregation type.

Patent US7565693B2 (published on July 21, 2009; IPC: G06F 11/00) discloses the invention related to a system for the detection and prevention of network attacks. The system includes: a signature-based detecting device; an abnormal behavior detecting device; and a new device for generating and checking the signature, located between the signature-based detecting device and the abnormal behavior detecting device, wherein, if the abnormal behavior-based detecting device detects packages suspicious of a network attack, the new device for generating and checking signatures collects and performs searches, detects suspicious packages for general information, and then generates a new signature based on found general information and meanwhile checks whether the new generated signature is applicable to the signature-based detecting device, and then registers the new generated signature to the signature-based detecting device if it has been established that the new generated signature is applicable. The drawback of these system and method is the presence of the step of detecting automated activity based on the identification of abnormal behavior in the traffic, performed by the respective module. It allows the intrusion detection and prevention system to pre-identify the normal behavior information of a normal user and monitor abnormal network operations to find network intrusions, etc. when the abnormal network operation is contrary to the normal behavior and is generated based on the normal behavior information. However, the detection method based on abnormal behavior has a drawback, which is when the normal user is erroneously identified as a network intrusion. Moreover, the abnormal behavior-based detection method has a drawback in that, since detection of network intrusion requires so much time, unlike the signature-based detection method, the network cannot be protected against intrusion. The method under study calculates, using a statistical analysis, the boundary values of a typical traffic proportion for each signature group. Each signature group may be present in multiple subnetwork-service pairs. The method calculates a traffic proportion in each of such pairs for each group, with 25th and 75th percentiles. These data allow the calculation of the expected traffic proportion for each group. And then compare the suspicious activity to the statistically found average user activity. This approach allows for more accurately and quickly detecting new automated attacks that have not been previously captured by the system and method since the association with the previous attacks is lacking. The second drawback of these system and method is the lack of pre-aggregation of raw data and the most demanding computations; hence, a data pre-aggregation module implementing pre-aggregation of raw data and the most demanding computations. The present system and method include a step performed by a pre-aggregation module, wherein raw data and most demanding computations are continuously pre-aggregated based on a cascade of materialized views, leading to a reduced need for computing capacities for final data aggregation by a factor of 2 or 3, depending on the aggregation type.

The closest parallel is patent RU2634209C1 (published on October 24, 2017; IPC: G06F 21/35), which discloses the invention pertaining to computer attack detection. The technical result is to improve the efficiency of computer attack detection. A method of automatic generation of decision rules for feedback systems for detecting intrusions, implemented on a server, includes at least the following steps: retrieving at least one event from the event database formed by data obtained from at least one sensor; analyzing the retrieved event in terms of its attribution to the class of interaction with the control centers of malicious software; extracting from at least one of the above events related to the class of interaction with the control centers of the malicious software at least one feature used to generate decision rules; generating decision rules using at least one of the above extracted features; saving the generated decision rules and providing a possibility to update the decision rules for at least one sensor; checking cyclically by sensors the availability of updates at the central node and, if the updates are available, obtaining them for use, wherein in case of obtaining updates, a trigger reloading the decision rules activates at sensors. The distinctive feature and drawback of these system and method is the absence of pre-aggregation of raw data and most demanding computations, and, hence, a data pre-aggregation module implementing pre-aggregation of raw data and most demanding computations. The present system and method include a step performed by a pre-aggregation module, wherein raw data and most demanding computations are continuously pre-aggregated based on a cascade of materialized views, leading to a reduced need for computing capacities for final data aggregation by a factor of 2 or 3, depending on the aggregation type.

### Summary of the invention

The present invention aims at creating and developing a system and method of automated assessment of network traffic signature quality that provides highly efficient detection of automated activities in network traffic and reduces the need for computing capacities for final data aggregation.

This aim is achieved by the technical results, such as high detection efficiency of automated activities, feedback, and reduced need for computing capacities for final data aggregation, by:
using statistical analysis for system automation;
using statistical analysis for detecting the presence of malicious automated activity in the network;
using statistical analysis for generating and updating decision signatures;
using a pipeline for pre-aggregation of raw data and most demanding computations;
and the presence of the final data aggregation step with grouping and assessment of proportionality of automated and non-automated activities.

The technical result is achieved by the system for automated assessment of the network traffic signature quality including an event collection module, a decision signature list, an analysis module, and a final aggregation module, and is characterized in that it includes a pre-aggregation module configured to continuously process raw data and most demanding computations, wherein the event collection module is connected to the pre-aggregation module, which is connected to the analysis module, and/or to the final aggregation module, wherein the analysis module is also connected to the final aggregation module, and the list of decision signatures is connected to the event collection module, and to the final aggregation module.

Wherein the event collection module is required to collect events in the network traffic and group them according to signatures. The list of decision signatures is required to store decision signatures against which the detection of automated activities in the network traffic is performed. The analysis module is required to calculate a typical proportion of automated and non-automated activities in the network traffic as well as to generate boundary values and decision signatures using statistical analysis. The final aggregation module is required to assess the traffic quality for each parameter group, e.g., subnetwork-source, service-destination, TCP/IP signature, SSL/TLS signature, and HTTP signature. The data pre-aggregation module is required to generate the continuous pipeline for pre-aggregation of raw data and the most demanding computations, which significantly improves the system's processing speed and reduces the need for computing capacities for final data aggregation.

Furthermore, the event collection module can be configured to collect events in the network traffic sent from at least one computer, computer system, and/or server configured to connect to the network.

The event collection module may also additionally include a grouping module to group events according to the signature set.

The analysis module may additionally include the list of boundary values and the boundary value repository module, configured to automatically update the list of boundary values based on continuously received new data.

Moreover, the analysis module may additionally include the assessment module to assess the presence of statistical outliers. This allows for more accurate determination of boundary values for all events, considering computational errors.

The final aggregation module may include the signature repository module configured to update the list of decision signatures. This allows more precise detection of automated malicious activities in the network since statistical assessment of unknown and formally legitimate signatures, which make decisions based on continuously updated data, is performed.

Furthermore, the claimed technical results are achieved by a method of automatic assessment of the network traffic signature quality implemented cyclically as software on the server, wherein the method involves collecting events in the network traffic using an event collection module, pre-aggregating raw data and most demanding computations using a pre-aggregation module, calculating, based on the collected events, the boundary values of a typical proportion of automated and non-automated activities in the network traffic for each event using an analysis module, and performing final aggregation of all events collected in the network traffic using a final aggregation module.

Wherein the step of collecting events in the network traffic is required to generate a database of network traffic events, including checks for the presence of automated malicious activity. The step of pre-aggregating raw data and most demanding computations is required to improve the method speed as well as reduce the need for computing capacities for the final data aggregation step. The step of calculating boundary values for a typical proportion of automated and non-automated activities in the network traffic is required to generate boundary values and determine a proportion of malicious automated activity in the network traffic using statistical analysis. The step of final aggregation of all events is required to generate decision signatures.

Additionally, a step of grouping events according to signatures may be implemented after the step of collecting events in the network traffic. This allows more convenient comparison of signatures with a list of decision signatures and the generation of new decision signatures.

Additionally, boundary values for each event may be updated using a boundary value repository module after the step of calculating, based on collected events, the boundary values of a typical proportion of automated and non-automated activities in the network traffic. This makes the system more efficient in detecting and identifying malicious automated activity.

Additionally, assessment of the presence of statistical outliers for each event using an assessment module can be performed after the step of calculating, based on collected events, the boundary values of a typical proportion of automated and non-automated activities in the network traffic. This allows determining boundary values for each event, considering computational errors more accurately.

At the step of pre-aggregating raw data using the pre-aggregation module, raw data can be additionally recorded, and demanding computations can be made with the recorded raw data to improve the method speed and reduce the need for computing capacities for the step of final data aggregation.

At the step of pre-aggregation of raw data, after the step of demanding computations with the recorded raw data, at least sending of the pre-processed data to the analysis module and/or sending of the pre-processed data to the final aggregation module are further possible, which improves the method speed and reduces the need for computing capacities for the final data aggregation step and for the statistical analysis step.

Additionally, at the step of final aggregation of all events, the calculated boundary values of a typical proportion of automated and non-automated activities in the network traffic can be compared. This provides a way to assess the presence of potential malicious activity in network traffic.

Additionally, at the step of final aggregation of all events, the calculated boundary values of a typical proportion of automated and non-automated activities in the network traffic can be compared with the boundary values of a typical proportion of automated and non-automated activities in the network traffic calculated in at least one previous cycle. This allows comparing the newly obtained data with the data obtained in previous cycles, which, in turn, provides more accurate information on the presence or absence of malicious activity in the network traffic.

Additionally, at the step of final aggregation of all events, based on the calculated boundary values of a typical proportion of automated and non-automated activities in the network traffic, a ratio of automated to non-automated activities in the network traffic can be assessed. The assessment allows understanding the proportion of the automated activity in the network traffic and checking whether it is within the normal values, which also allows tracking the presence or absence of any malicious activity in the network traffic.

Additionally, decision signatures may be generated at the step of final aggregation of all events. This provides a way to indicate malicious network activity that has been found.

Additionally, the generated decision signatures may be saved in the list of decision signatures that allows for the identification of malicious network activity at the final aggregation of all events.

Additionally, the list of decision signatures may be updated by the generated decision signatures using the signature repository module included in the final aggregation module at the final aggregation of all events. This makes it possible to automatically delete and save newly generated solver signatures, which will later be useful for detecting malicious network activity.

Also, the final aggregation process may be carried out in stages as follows. First, the calculated boundary values of a typical proportion of automated and non-automated activities in the network traffic can be compared, and then the calculated boundary values of a typical proportion of automated and non-automated activities in the network traffic are compared with the boundary values of a typical proportion of automated and non-automated activities in the network traffic calculated in at least one previous cycle. Then, based on the calculated boundary values of a proportion of automated and non-automated activities in the network traffic, the ratio of automated to non-automated activities in the network traffic may be assessed. Based on this assessment, the decision signatures may be generated, the decision signatures may be saved in the list of decision signatures, and/or the list of decision signatures may be updated with the generated decision signatures using the signature repository module.

Moreover, any of the above steps may be implemented separately for each of the generated event groups according to the signatures for convenient comparison of signatures with the list of decision signatures and generation of new decision signatures.

### Description of drawings

The claimed subject matter as provided herein has been disclosed item by item and is clearly stated in the claims. The above tasks, features, and advantages of the invention are clear from the following detailed description in conjunction with the attached figures, wherein:
Fig. 1A shows a schematic view of a system for automatic assessment of the network traffic signature quality.
Fig. 1B shows a schematic view of a system for automatic assessment of the network traffic signature quality with additional elements.
Fig. 2A shows a flowchart describing an embodiment of a method of automatic assessment of the network traffic signature quality.
Fig. 2B shows a flowchart describing an embodiment of a method of automatic assessment of the network traffic signature quality with an additional step of event grouping.
Fig. 2C shows a flowchart describing an embodiment of a method of automatic assessment of the network traffic signature quality with an additional step of automatic updating of the boundary values.
Fig. 2D shows a flowchart describing an embodiment of a method of automatic assessment of the network traffic signature quality with an additional step of assessment of the presence of statistical outliers.
Fig. 2E shows a flowchart describing an embodiment of a method of automatic assessment of the network traffic signature quality with an embodiment of the raw data pre-aggregation process.
Fig. 2F shows a flowchart describing an embodiment of a method of automatic assessment of the network traffic signature quality with an additional embodiment of the data processing sequence.
Fig. 2G shows a flowchart describing an embodiment of a method of automatic assessment of the network traffic signature quality with embodiments of the final aggregation process.
Fig. 2H shows a flowchart describing an embodiment of a method of automatic assessment of the network traffic signature quality combining all of the above embodiments.

### Detailed Description

The following detailed description of the invention embodiment provides numerous implementation details intended to provide a clear understanding of the present invention. However, it is obvious to a person skilled in the subject matter how the present invention can be used with or without these implementation details. In other instances, well-known methods, procedures, and components are not described in detail so as not to impede an undue understanding of the features of the present invention.

Moreover, it is obvious from the foregoing disclosure that the invention is not limited to the embodiment shown. Numerous possible modifications, alterations, variations, and substitutions that preserve the substance and form of the present invention are obvious to those skilled in the art.

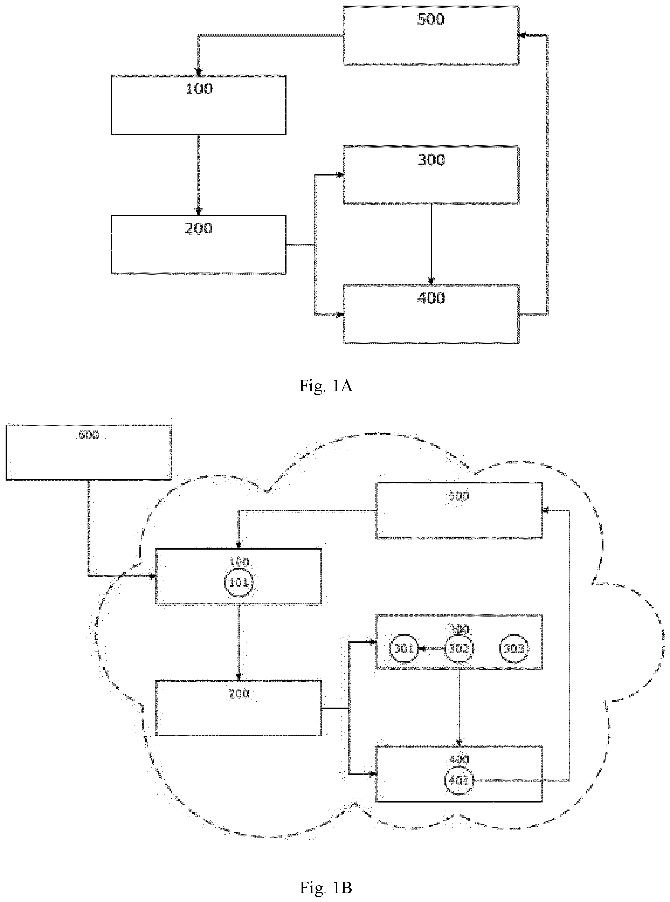

Fig. 1A shows a schematic view of a system for automatic assessment of network traffic quality. The system for automatic assessment of the network traffic signature quality includes an event collection module **100,** a pre-aggregation module **200,** an analysis module **300,** a final aggregation module **400,** and a list of decision signatures **500.** The event collection module **100** is connected to the pre-aggregation module **200** which, in turn, is connected to the analysis module **300,** and/or to the final aggregation module **400.** The analysis module **300** is also connected to the final aggregation module **400,** and the final aggregation module **400** is connected to the decision signature list **500.** The list of decision signatures is connected to the event collection module **100.** Wherein the data pre-aggregation module **200** is configured to continuously process raw data and the most demanding computations.

The system operates as follows. Events are collected using the event collection module **100.** Further, the collected events are sent to the pre-aggregation module **200** to implement the pre-aggregation process for raw data and the most demanding computations. The pre-processed data are then sent to the analysis module **300** and/or to the final aggregation module **400.** If the pre-processed data were sent to the analysis module **300,** the analysis module **300** would calculate the boundary values of a typical proportion of automated and non-automated activities in the network traffic therewith. Further, the pre-processed demanding data together with the calculated boundary values are sent to the final aggregation module **400,** which, in turn, implements the final data aggregation process therewith. In case the pre-aggregation module **200** has sent the pre-processed data directly to the final aggregation module **400,** the final aggregation process is performed with them without first calculating the boundary values of the characteristic proportion of automated and non-automated activity in the network traffic. After the pre-processed data pass through the final aggregation process, the decision signatures are generated and saved in the list of decision signatures **500,** which is further used in event collection by the event collection module **100.**

The system for automatic assessment of the network traffic signature quality may also include additional submodules, hereinafter referred to as modules, as shown in Fig. 1B.

The event collection module **100** of the system for automatic assessment of the network traffic signature quality may be additionally connected to a remote device **600** and may be configured to collect events in the network traffic from at least the remote device **600.** A computer, computer system, and/or server configured to connect to the network may be used as the remote device **600.**

Also, the event collection module **100** may additionally include a grouping module **101** intended to group the collected events according to signatures.

The analysis module **300** may additionally include a list of boundary values **301** and a boundary value repository module **302.** Wherein the list of boundary values is intended to store the boundary values of a typical proportion of automated and non-automated activities in the network traffic calculated by the analysis module **300.** The boundary values repository module **302** is intended to update the list of boundary values **301** if the analysis module **300** has calculated new boundary values for a typical proportion of automated and non-automated activities in the network traffic.

Moreover, the analysis module **300** may additionally include the assessment module **303,** intended to assess the presence of statistical outliers.

The final aggregation module **400** may additionally include the signature repository module **401** configured to update the list of decision signatures **500** if new decision signatures were generated at the final aggregation step.

The above additional modules and lists included in any of the main modules and lists may be integrated into the system both altogether and separately, depending on the system's demands. An image of the system's operation will be described below, which includes each of the above additional modules and lists; however, it is evident that some of the below aspects can be replaced and/or excluded from the system without any significant loss in terms of the technical result.

The system for automatic assessment of the network traffic signature quality according to the scheme provided in Fig. 1B operates as follows. Events are collected in the network traffic from the remote device **600** using the event collection module **100.** The collected events are grouped according to their signatures using the grouping module **101** included in the event collection module **100.** The events grouped according to the signatures are sent to the pre-aggregation module **200,** where raw data and the most demanding computations are pre-aggregated according to the signature groups. The pre-processed data are then sent to the analysis module **300** and/or to the final aggregation module **400.** If the pre-processed data were sent to the analysis module **300,** the analysis module **300** would calculate the boundary values of a typical proportion of automated and non-automated activities in the network traffic therewith. If boundary values were calculated for the first time, the calculated boundary values are saved in the list of boundary values **301.** However, if new boundary values were calculated that were different from those stored in the list of boundary values **301,** the list of boundary values **301** would be updated with the boundary values using the boundary values repository module **302.** Also, statistical outliers are assessed using the assessment module **303** included in the analysis module **300.** And then, the pre-processed data together with the calculated boundary values are sent to the final aggregation module **400,** which, in turn, implements final data aggregation therewith. In case the pre-aggregation module **200** has sent the pre-processed data directly to the final aggregation module **400,** the final aggregation process is performed with them without first calculating the boundary values of the characteristic proportion of automated and non-automated activity in the network traffic. After the pre-processed data pass through the final aggregation process, the decision signatures are generated and saved in the list of decision signatures **500,** which is further used in event collection by the event collection module **100.** If the list of decision signatures **500** already stores previously generated decision signatures, the list of decision signatures **500** is updated using the decision signature repository module **401** included in the final aggregation module **400.**

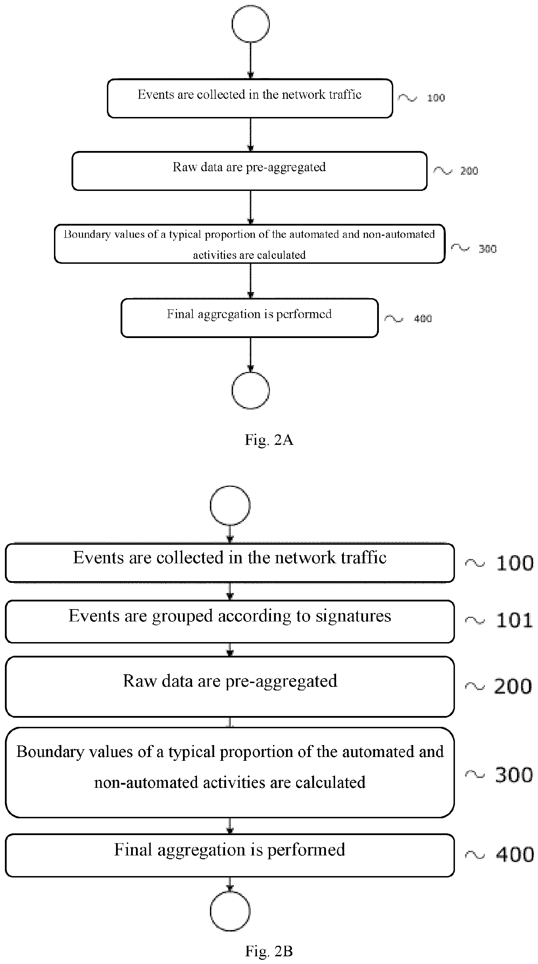

Fig. 2A shows a flowchart illustrating a method of automatic assessment of the network traffic signature quality. According to the provided method, events are first collected in the network traffic using the event collection module **100.** Then, raw data are pre-aggregated with the collected events using the pre-aggregation module **200.** After that, the boundary values of a typical proportion of the automated and non-automated activities in the network traffic are calculated on the basis of the collected events using the analysis module **300.** Then, final aggregation is implemented with all events collected in the network traffic using the final aggregation module **400.** The above sequence is performed cyclically in the software.

Fig. 2B shows a flowchart illustrating a method of automatic assessment of the network traffic signature quality, with an additional step of, after the step of collecting events in the network traffic using the event collection module **100,** grouping the events according to the signatures using the grouping module **101** included in the event collection module **100.**

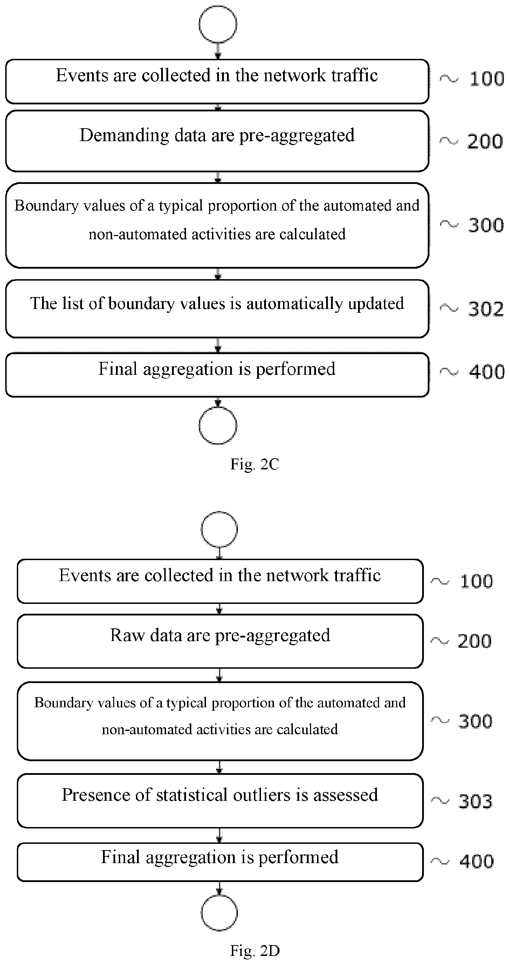

Fig. 2C shows a flowchart illustrating a method of automatic assessment of the network traffic signature quality, with an additional step of, after the step of calculating, based on the collected events, the boundary values of a typical proportion of automated and non-automated activities in the network traffic, automatically updating the list of boundary values **301** using the boundary value repository module **302.**

Fig. 2D shows a flowchart illustrating a method of automatic assessment of the network traffic signature quality, with an additional step of, after the step of calculating, based on collected events, the boundary values of a typical proportion of automated and non-automated activities in the network traffic, assessing the presence of statistical outliers using the assessment module **303** included in the analysis module **300.**

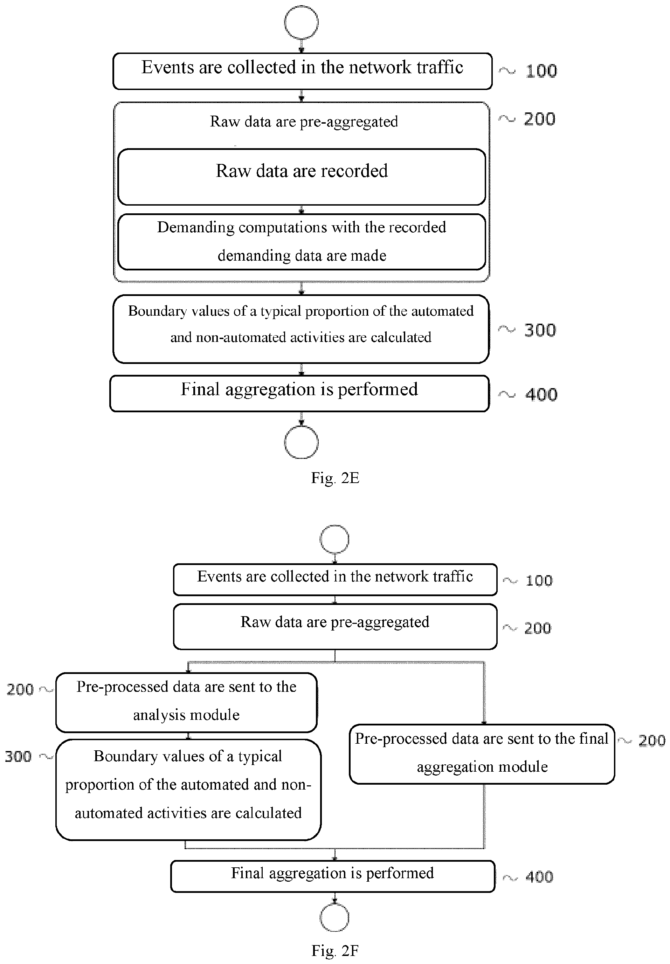

The step of data pre-aggregation may be implemented by many means, but the preferred method is shown in Fig. 2E. Here, a flowchart is provided that illustrates a method of automatic assessment of the network traffic signature quality, with a possible embodiment of the step of raw data pre-aggregation, wherein the raw data collected from the events are recorded and then demanding computations are made with the recorded raw data collected from the events. This step may be also implemented without raw data recording. Before demanding computations with raw data, they can be stored on a remote computer whose network traffic is being currently monitored, may be stored in a transient memory, in a third-party database, etc., i.e., at any location where the pre-aggregation module can make demanding computations therewith.

Fig. 2F shows a flowchart illustrating a method of automatic assessment of the network traffic signatures, with an additional step of, after the step of demanding computations with the recorded raw data using the pre-aggregation module **200,** sending the pre-processed data to the analysis module **300** or to the final aggregation module **400.**

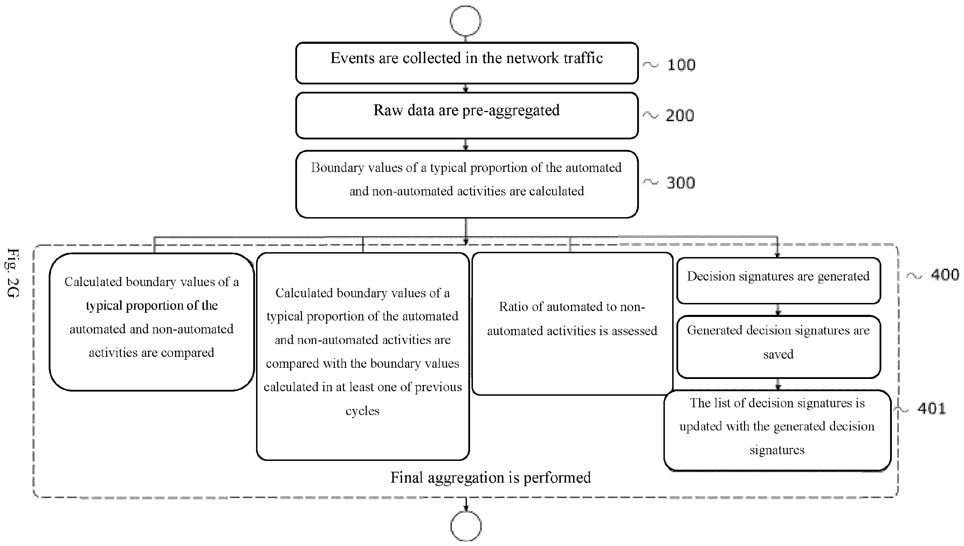

Fig. 2G shows a flowchart illustrating a method of automatic assessment of the network traffic signatures, with possible embodiments of a step of final data aggregation. According to the first embodiment, calculated boundary values of a typical proportion of automated and non-automated activities in the network traffic are compared using the final aggregation module **400** at the final aggregation step. According to the second embodiment, the calculated boundary values of a typical proportion of automated and non-automated activities in the network traffic are compared with the boundary values of a typical proportion of automated and non-automated activities in the network traffic calculated in at least one previous cycle. According to the third embodiment, based on calculated boundary values of a proportion of automated and non-automated activities in the network traffic, the ratio of automated to non-automated activities in the network traffic is assessed. According to the fourth embodiment, decision signatures are generated, the generated decision signatures are saved in the list of decision signatures **500,** or the list of decision signatures **500** is updated with the generated decision signatures using the signature repository module **401** at the final aggregation step. The above embodiments of the final aggregation step may be implemented both separately and in any combination.

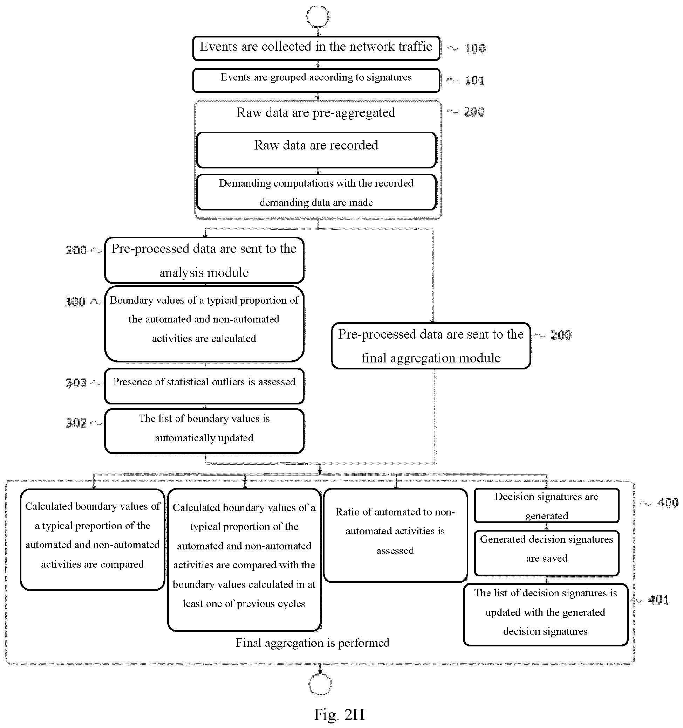

Fig. 2H shows a flowchart illustrating a method of automatic assessment of the network traffic signature quality combining all of the above steps, both main and additional.

Moreover, each step of the method of automatic assessment of the network traffic signature quality following the step of grouping the collected events according to the signatures using the grouping module **101** included in the event collection module **100** may be implemented separately for each of the signature groups.

The present materials of the application provide a preferred disclosure of the embodiment of the claimed technical solution that should not be used as limiting other particular embodiments that do not go beyond the claimed scope of legal protection and are evident for those skilled in the art.

## Claims

1. A system for automatic assessment of the network traffic signature quality, including an event collection module, a list of decision signatures, an analysis module, and a final aggregation module, is **characterized in that** it includes a pre-aggregation module configured to continuously process raw data and make demanding computations, wherein the event collection module is connected to the pre-aggregation module that is connected to the analysis module and/or to the final aggregation module, wherein the analysis module is also connected to the final aggregation module, and the list of decision signatures is connected to the event collection module and to the final aggregation module.

2. The system for automatic assessment of the network traffic signature quality of Claim 1 is **characterized in that** the event collection module is configured to collect events in the network traffic from at least one computer, computer system, and/or server configured to connect to the network.

3. The system for automatic assessment of the network traffic signature quality of Claims 1 and 2 is **characterized in that** the event collection module includes a grouping module.

4. The system for automatic assessment of the network traffic signature quality of Claim 1, **characterized in that** the analysis module includes a list of boundary values and a boundary value repository module configured to update the list of boundary values.

5. The system for automatic assessment of the network traffic signature quality of Claim 1, **characterized in that** the analysis module includes an assessment module configured to assess the presence of statistical outliers.

6. The system for automatic assessment of the network traffic signature quality of Claim 1, **characterized in that** the final aggregation module includes a signature repository module configured to update the list of decision signatures.

7. A method of automatic assessment of the network traffic signature quality, wherein, cyclically:
• events are collected in the network traffic using the event collection module;
• raw data are pre-aggregated using the pre-aggregation module;
• based on the collected events, the boundary values of a typical proportion of automated and non-automated activities in the network traffic are calculated using the analysis module;
• the final aggregation of all events collected in the network traffic is performed using the final aggregation module.

8. The method of automatic assessment of the network traffic signature quality of Claim 7 is **characterized in that**, after the step of collecting events in the network traffic using the event collection module, events are grouped according to signatures using the grouping module included in the event collection module.

9. The method of automatic assessment of the network traffic signature quality of Claims 7 and 8 is **characterized in that**, after the step of calculating, based on collected events, the boundary values of a typical proportion of automated and non-automated activities in the network traffic, the list of boundary values is automatically updated using the boundary value repository module.

10. The method of automatic assessment of the network traffic signature quality of Claims 7 and 8 is **characterized in that**, after the step of calculating, based on collected events, the boundary values of a typical proportion of automated and non-automated activities in the network traffic, the presence of statistical outliers is assessed using the assessment module.

11. The method of automatic assessment of the network traffic signature quality of Claim 7 is **characterized in that** the step of pre-aggregating raw data using the pre-aggregation module is implemented as follows:
• raw demanding data collected from the events are recorded;
• demanding computations with the recorded raw data collected from the events are made.

12. The method of automatic assessment of the network traffic signature quality of Claims 7 and 10 is **characterized in that**, at the step of pre-aggregating raw data, after the step of demanding computations with the recorded raw data, using the pre-aggregation module, at least one of the following is performed:
• pre-processed data are sent to the analysis module;
• pre-processed data are sent to the final aggregation module.

13. The method of automatic assessment of the network traffic signature quality of Claim 7, **characterized by** the final aggregation of all events using the final aggregation module, is performed by comparing the calculated boundary values of a typical proportion of automated and non-automated activities in the network traffic.

14. The method of automatic assessment of the network traffic signature quality of Claim 7, **characterized by** the final aggregation of all events using the final aggregation module, is performed by comparing the calculated boundary values of a typical proportion of automated and non-automated activities in the network traffic with the boundary values of a typical proportion of automated and non-automated activities in the network traffic calculated in at least one previous cycle.

15. The method of automatic assessment of the network traffic signature quality of Claim 7 is **characterized in that** the final aggregation of all events using the final aggregation module is performed by assessment based on calculated boundary values of a typical proportion of automated and non-automated activities in the network traffic and of a ratio of automated to non-automated activities in the network traffic.

16. The method of automatic assessment of the network traffic signature quality of Claims 14 and 15 is **characterized in that** the decision signatures generate the final aggregation of all events using the final aggregation module based on the performed assessment.

17. The method of automatic assessment of the network traffic signature quality of claim 16, **characterized in that**, for final aggregation of all events using the final aggregation module, the generated decision signatures are saved to the list of decision signatures.

18. The method of automatic assessment of the network traffic signature quality of Claims 16 and 17 is **characterized in that**, for final aggregation of all events using the final aggregation module, the list of decision signatures is updated with the generated decision signatures using the signature repository module included in the final aggregation module.

19. The method of automatic assessment of the network traffic signature quality of Claim 7 is **characterized by** the final aggregation of all events using the final aggregation module, which is performed as follows:
• calculated boundary values of a typical proportion of automated and non-automated activities in the network traffic are compared with the boundary values of a typical proportion of automated and non-automated activities in the network traffic calculated in at least one previous cycle;
• based on calculated boundary values of a proportion of automated and non-automated activities in the network traffic, the ratio of automated to non-automated activities in the network traffic is assessed;
• based on the assessment, decision signatures are generated;
• the generated decision signatures are saved in the list of decision signatures;
• the list of decision signatures is updated with the generated decision signatures using the signature repository module included into the final aggregation module.

20. The method of automatic assessment of the network traffic signature quality of any one of Claims 7-19 is **characterized in that** each step is performed separately for each group of events generated using the grouping module according to signatures.
